# EUROPEAN PATENT SPECIFICATION

(11) **EP 3 705 849 B1**
(45) Date of publication and mention of the grant of the patent: **11.09.2024**
(21) Application number: 20161274.4
(22) Date of filing: 05.03.2020
(51) Int. Cl.: G01C 23/00, G01C 21/00, G01C 21/20, G08G 5/00, G06Q 10/04

(54) **METHOD AND APPARATUS FOR VISUALIZING RISK LEVELS ASSOCIATED WITH AERIAL VEHICLE FLIGHTS**
VERFAHREN UND VORRICHTUNG ZUR VISUALISIERUNG VON MIT LUFTFAHRZEUGFLÜGEN VERBUNDENEN RISIKONIVEAUS
PROCÉDÉ ET APPAREIL PERMETTANT DE VISUALISER LES NIVEAUX DE RISQUE ASSOCIÉS AUX VOLS DE VÉHICULES AÉRIENS

(30) Priority: 08.03.2019 US 201916297216
(43) Date of publication of application: 09.09.2020
(73) Proprietor: HERE Global B.V., 5611 ZT Eindhoven (NL)
(72) Inventor: Velastri, Michele, Chicago, IL 60606 (US); Hartmann, Friedrich, Chicago, IL 60606 (US); Koval, Dmitry, Chicago, IL 60606 (US); Auvinen, Virva Emilia, Chicago, IL 60606 (US); Stade-Schuldt, Christian, Chicago, IL 60606 (US)
(74) Representative: Potter Clarkson

(56) References cited:
- EP-A2- 3 236 213
- WO-A1-2014/106268
- WO-A2-03/025507
- US-A1- 2003 187 720
- US-A1- 2016 137 309
- US-A1- 2016 140 851
- US-A1- 2018 038 695
- US-B1- 7 194 353
- US-B1- 8 484 151
- US-B1- 9 542 849

## Description

### BACKGROUND

The growing use of aerial vehicles (man and unmanned aerial vehicles or drones) has raised concerns about increased aerial traffic. This increased traffic, for instance, can lead to increased safety risks (e.g., to the public or the aerial vehicles themselves) as well as noise pollution from aerial vehicles flying above streets and buildings. Eventually, such concerns may lead to widespread opposition to the commercial or private use of aerial vehicles or drones. However, such safety risks are not always physical risks and therefore may not be visible to pilots or operators of aerial vehicles. For example, risks associated with flying over densely populated areas, areas with poor network coverage, areas with high positioning accuracy error, etc. often are not easily discernible by pilots. Accordingly, service providers and manufacturers face significant technical challenges to assessing and presenting the risks associated with operating aerial vehicles, particularly in the airspace above populated areas where population density can change quickly over short periods of time.

Patent application "WO 03/025507 A2" discloses a route planner which uses an adaptive algorithm to determine a vertical path. The vertical path is adjusted based on hazard areas represented by horizontal polygons having top and bottom altitudes. The cruise altitude may be specified, e. g., the top or bottom altitude of the hazard areas. Patent application "US 2016137309 A1" discloses a landing hazard avoidance display, where color coded maps can indicate zones in two dimensions relative to the vehicles position where it is safe to land. Patent "US 9542849 B1" discloses one or more avionics systems and/or remote aircraft operator systems configured to receive risk-based flight path data from a route generator. The route generator may acquire navigation data representative of at least a flight plan, acquire risk object data based upon the navigation data and determine the risk-based flight path data. The risk object data may include a plurality of risk clearance altitudes and/or elevations. Patent application "EP 3236213 A2" discloses an aircraft display system to present a real-time, three-dimensional depiction of a region around an aircraft, where this three-dimensional depiction is fixed to the aircraft's coordinate location and attitude. Patent application "WO 2014/106268 A1" discloses a dynamic aircraft threat controller manager (DATCM) that may receive anticipated flight plan parameter data, obtain weather/atmospheric data based on the flight plan parameter data and determine a plurality of four-dimensional grid points based on the flight plan parameter data. The DATCM may then determine comprehensive hazards mappings.

### SOME EXAMPLE EMBODIMENTS

Therefore, there is a need for an approach for visualizing risk levels associated with particular areas under the potential flightpaths of aerial vehicle flights (e.g., so that aerial vehicles can avoid such areas to reduce safety risks as they plan their routes).

The invention is defined by the appended independent claims. The dependent claims define preferred embodiments of the invention.

According to one example, not encompassed by the wording of the claims but considered as useful for understanding the invention, a method comprises determining a flight path for an aerial vehicle. The method also comprises calculating at least one risk area along the flight path based on risk-related data associated with the flight path (e.g., data on population density, electromagnetic fields, absence of location signals such as Global Positioning System (GPS) signals, weather, network coverage, aviation related data, etc.). The method further comprises generating a representation of the at least one risk area as a virtual obstacle object. The method further comprises rendering the virtual obstacle object in a user interface of a device in relation to the flight path.

According to another example, not encompassed by the wording of the claims but considered as useful for understanding the invention, an apparatus comprises at least one processor, and at least one memory including computer program code for one or more computer programs, the at least one memory and the computer program code configured to, with the at least one processor, cause, at least in part, the apparatus to determine a flight path for an aerial vehicle. The apparatus is also caused to calculate at least one risk area along the flight path based on risk-related data associated with the flight path (e.g., data on population density, electromagnetic fields, absence of location signals such as GPS signals, weather, network coverage, aviation related data, etc.). The apparatus is further caused to generate a representation of the at least one risk area as a virtual obstacle object. The apparatus is further caused to render the virtual obstacle object in a user interface of a device in relation to the flight path.

According to another example, not encompassed by the wording of the claims but considered as useful for understanding the invention, a computer-readable storage medium carries one or more sequences of one or more instructions which, when executed by one or more processors, cause, at least in part, an apparatus to determine a flight path for an aerial vehicle. The apparatus is also caused to calculate at least one risk area along the flight path based on risk-related data associated with the flight path (e.g., data on population density, electromagnetic fields, absence of location signals such as GPS signals, weather, network coverage, aviation related data, etc.). The apparatus is further caused to generate a representation of the at least one risk area as a virtual obstacle object. The apparatus is further caused to render the virtual obstacle object in a user interface of a device in relation to the flight path.

According to another example, not encompassed by the wording of the claims but considered as useful for understanding the invention, an apparatus comprises means for determining a flight path for an aerial vehicle. The method also comprises calculating at least one risk area along the flight path based on risk-related data associated with the flight path (e.g., data on population density, electromagnetic fields, absence of location signals such as GPS signals, weather, network coverage, aviation related data, etc.). The method further comprises generating a representation of the at least one risk area as a virtual obstacle object. The method further comprises rendering the virtual obstacle object in a user interface of a device in relation to the flight path.

According to one example, not encompassed by the wording of the claims but considered as useful for understanding the invention, a method comprises selecting an area of interest. The method also comprises determining human activity data for the area of interest. By way of example, the human activity data includes a plurality of data sources including but not limited to: positioning data from a mobile device, traffic data, public transport routing request data, smart city data, mobile communications operator data, social media data, and event data. The method further comprises generating a prediction of a population density in the area of interest at a selected time based on the human activity data. In one embodiment, the selected time can be with respect to a time of day, a day, a week, a season, a year, or a combination thereof in the future.

According to another example, not encompassed by the wording of the claims but considered as useful for understanding the invention, an apparatus comprises at least one processor, and at least one memory including computer program code for one or more computer programs, the at least one memory and the computer program code configured to, with the at least one processor, cause, at least in part, the apparatus to select an area of interest. The apparatus is also caused to determine human activity data for the area of interest. By way of example, the human activity data includes a plurality of data sources including but not limited to: positioning data from a mobile device, traffic data, public transport routing request data, smart city data, mobile communications operator data, social media data, and event data. The apparatus is further caused to generate a prediction of a population density in the area of interest at a selected time based on the human activity data. In one embodiment, the selected time can be with respect to a time of day, a day, a week, a season, a year, or a combination thereof in the future.

According to another example, not encompassed by the wording of the claims but considered as useful for understanding the invention, a computer-readable storage medium carries one or more sequences of one or more instructions which, when executed by one or more processors, cause, at least in part, an apparatus to select an area of interest. The apparatus is also caused to determine human activity data for the area of interest. By way of example, the human activity data includes a plurality of data sources including but not limited to: positioning data from a mobile device, traffic data, public transport routing request data, smart city data, mobile communications operator data, social media data, and event data. The apparatus is further caused to generate a prediction of a population density in the area of interest at a selected time based on the human activity data. In one embodiment, the selected time can be with respect to a time of day, a day, a week, a season, a year, or a combination thereof in the future.

According to another example, not encompassed by the wording of the claims but considered as useful for understanding the invention, an apparatus comprises means for selecting an area of interest. The apparatus also comprises means for determining human activity data for the area of interest. By way of example, the human activity data includes a plurality of data sources including but not limited to: positioning data from a mobile device, traffic data, public transport routing request data, smart city data, mobile communications operator data, social media data, and event data. The apparatus further comprises means for generating a prediction of a population density in the area of interest at a selected time based on the human activity data. In one embodiment, the selected time can be with respect to a time of day, a day, a week, a season, a year, or a combination thereof.

In various example embodiments, the methods (or processes) can be accomplished on the service provider side or on the mobile device side or in any shared way between service provider and mobile device with actions being performed on both sides.

Still other aspects, features, and advantages of the invention are readily apparent from the following detailed description, simply by illustrating a number of particular embodiments and implementations, including the best mode contemplated for carrying out the invention. The invention is defined by the appended independent claims. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable of visualizing risk levels for aerial vehicle flights, according to one embodiment;
FIG. 2 is a diagram of the components of a mapping platform, according to one embodiment;
FIG. 3 is a flowchart of a process for visualizing risk levels for aerial vehicle flights, according to one embodiment;
FIG. 4 is a diagram illustrating an example virtual obstacle object, according to one embodiment;
FIG. 5 is a diagram of a user interface for visualizing risk levels for aerial vehicle flights, according to one embodiment;
FIG. 6 is a diagram of an augmented reality user interface for visualizing risk levels for aerial vehicle flights, according to one embodiment;
FIG. 7 is a diagram of an overview of providing dynamic population density data, according to one embodiment;
FIG. 8 is a flowchart of a process for providing dynamic population density based on human activity data, according to one embodiment;
FIG. 9 is a diagram of an example three-dimensional representation of dynamic population density data, according to one embodiment;
FIG. 10 is a diagram of an example user interface for providing dynamic population density data, according to one embodiment;
FIG. 11 is a diagram of a geographic database capable of storing map data for underground/interior drone routing, according to one embodiment;
FIG. 12 is a diagram of hardware that can be used to implement an embodiment;
FIG. 13 is a diagram of a chip set that can be used to implement an embodiment; and
FIG. 14 is a diagram of a mobile terminal (e.g., handset or aerial vehicle or part thereof) that can be used to implement an embodiment.

### DESCRIPTION OF SOME EMBODIMENTS

Examples of a method, apparatus, and computer program for visualizing risk levels associated with aerial vehicle flights are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

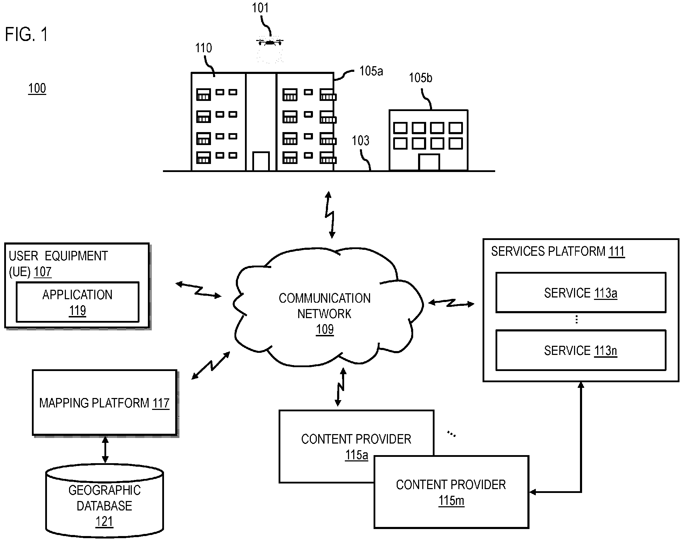

FIG. 1 is a diagram of a system capable of visualizing risk levels for aerial vehicle flights, according to one embodiment. The use of manned or unmanned aerial vehicles is becoming more widespread. Generally, an aerial vehicle 101 operates by flying above streets 103, buildings 105a and 105b (also collectively referred to as buildings 105), and/or other public spaces where safety risks to the public and/or the aerial vehicle 101 as well as other flight restrictions often apply. For example, drone flights might have to be limited during night hours to reduce noise pollution and related disturbances during typical sleep or rest times. In another example, drone flights might have to be restricted during severe weather events that could affect the aerial vehicle 101's ability to operate safely. In addition, any crashing or malfunctioning of the aerial vehicle 101 can pose serious threat to people and/or things below the aerial vehicle 101's flight path.

Other issues occurring in specific areas of the flight path or potential flight path of the aerial vehicle 101 can also increase potential risks associated with operating the aerial vehicle 101. For example, flying over highly populated areas can increase the probability that a crash of the aerial vehicle 101 will result in casualties. While pilots (e.g., human or machine) of aerial vehicles 101 can typically see potential physical obstacles (e.g., buildings or structures that can increase collision risks) and avoid them, it is much more difficult for pilots to determine or perceive risks such as flying over populated areas that may also significantly increase safety risks. Other similar risks include but are not limited to flying through strong electromagnetic fields that can affect flight sensors, flying in areas with limited GPS or other location signals, flying in areas with adverse weather conditions, and/or the like.

Moreover, determining some risk-related data such as up-to-date and accurate population density for a given area under potential flight paths also can be technically challenging. For example, population density for a given area is traditionally provided through static census data taken at relatively infrequent intervals (e.g., census taken every few years). This means that most areas generally have a fixed or static estimation of the number of people occupying a particular area. However, this static census estimation may not always be a good estimation of an area's true population at any point in time. For example, many areas like city centers see large population changes over the course of the day as people leave or enter one area due to regular commuting cycles, special events, temporal variances, etc. This level of inaccuracy can be significant for certain applications such as aerial flights over populated areas. Therefore, obtaining data on real-time population density over areas where an aerial is flying or planning to fly presents significant technical challenges.

To address the technical challenges associated with determining and then visualizing aerial flight safety risks, the system 100 of FIG. 1 introduces a capability to enable human and machine pilots of aerial vehicles 101 to understand the safety risks associated with a given flight path or potential flight path by aggregating various location-based risk factors or risk-related data associated with the flight path. The system 100 then represents or visualizes the calculated risks as "virtual obstacle objects" on or around the flight path or potential flight path. The visual representation or "virtual obstacle object" highlights or otherwise indicates the risk for the aerial vehicle 101 to operate over the area represented by the virtual obstacle object. The object is referred to as a "virtual" obstacle because the aggregated risks are not necessarily a risk linked to physical objects. But rather, the virtual obstacle object is a combination of risks composed of one or more risk factors (e.g., sometimes invisible) associated with a corresponding area of interest including but not limited to:
- Population or people density (see further description below for embodiments for determining population density);
- Electromagnetic fields;
- Absence of GPS or other location signals;
- Winds or other weather conditions;
- Network (e.g., cellular network) coverage; and
- Aviation-related data (e.g., air traffic, etc.).

In other words, a "virtual obstacle object" is a three-dimensional (3D) volume extending vertically from the ground at the corresponding area of interest into the airspace above. When rendered on or near a flight path or potential flight path, the volume can appear as a "obstacle" in the way of the flight path, so that the pilot of the aerial vehicle 101 can avoid this "virtual obstacle object" in a similar manner to other physical obstacles. As indicated above, the extent of the 3D volume of object represents the aggregated risk for a given area under the flight path or potential flight path. The height of the virtual obstacle object is scaled to be proportional to the calculated risk level for the area. In one embodiment, the height of the virtual obstacle object is a function of time and hence creates a user interface with a dynamic landscape of multiple virtual obstacle objects that go "up and down" over the course of the day or other period of time to reflect the frequently changing patterns of the risk function aggregating the risk factors for an area of interest such as but not limited to population density and/or any other risk parameters that can affect the safety of operating the aerial vehicle 101.

In one embodiment, the system 100 also includes a capability to dynamically predict population density data for a given area based on collecting data from various data sources of human activity in the area, and then using the data to make the predictions of population density. In one embodiment, dynamic prediction of population density refers to predicting or estimating the population density for an area that can differentiate based on dynamic factors such as but not limited to time (e.g., estimate population density with respect to days, weeks, time of day, seasonality) and expected future events (e.g., sporting events, concerts, festivals, etc.). In contrast to traditional static census or population density data, the embodiments of dynamic population density described herein enables dynamic modeling of population flows in an area of interest so that population density can be determined or predicted with greater temporal granularity.

In one embodiment, with respect to an aerial vehicle use case, the dynamic population data along with other risk factors can be used to predict the risk levels of areas under the aerial vehicle 101's flight path. In other words, the system 100 enables the capability to quantify the risk levels that the aerial vehicle 101 may meet on the way by generating virtual obstacle objects or equivalent representations of the aggregated risks of areas under the aerial vehicle 101's flightpath at a time when the aerial vehicle 101 is predicted to fly over the areas. In one embodiment, the system 100 can then route the aerial vehicle 101 to avoid areas with risk levels above a threshold value or determine a route along which the aerial vehicle 101 is expected to fly over a minimum level of risk. In this way, safety risks can be reduced by reducing possible casualties or other risk factors that can result in case of a crash of the air vehicle 101.

It is noted that the aerial vehicle use case is one example application of dynamic population density data, it is contemplated that the embodiments of dynamic population density data described herein can be for any application including but not limited to: (1) preparing population models for a new point of interest (POI) or business to open, and (2) optimize urban planning.

In one embodiment, the system 100 can model dynamic population densities over time to provide visualizing the dynamic population of an area of interest over time as part of the virtual obstacle object or as a separate representation of population density. By way of example, the visualization can be a three-dimensional (3D) visualization that represents population densities as 3D volumes (e.g., shapes, building models, etc.) whose size is proportional to population density.

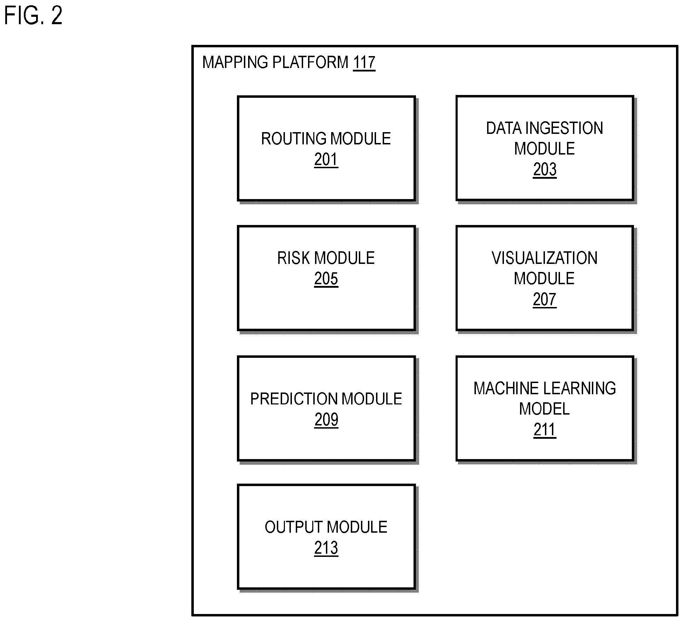

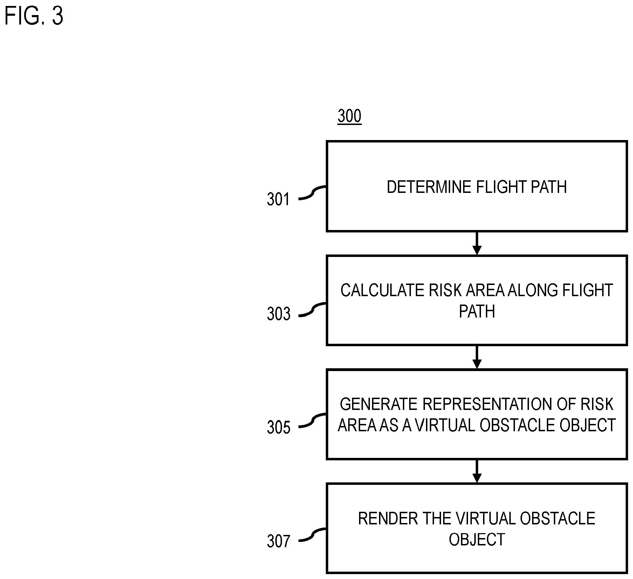

In one embodiment, the mapping platform 117 includes one or more components for providing dynamic population density modeling according to the various embodiments described herein. As shown in FIG. 2, the mapping platform 117 includes a routing module 201, a data ingestion module 203, a risk module 205, a visualization module 207, a prediction module 209, a machine learning model 211, and an output module 213. The above presented modules and components of the mapping platform 117 can be implemented in hardware, firmware, software, or a combination thereof. It is contemplated that the functions of these components may be combined or performed by other components of equivalent functionality. Though depicted as a separate entity in FIG. 1, it is contemplated that the mapping platform 117 may be implemented as a module of any of the components of the system 100 (e.g., a component of the aerial vehicle 101 and/or a client device such UE 107). In another embodiment, the mapping platform 117 and/or one or more of the modules 201-213 may be implemented as a cloud-based service, local service, native application, or combination thereof. The functions of these modules are discussed with respect to FIGs. 3-9 below.

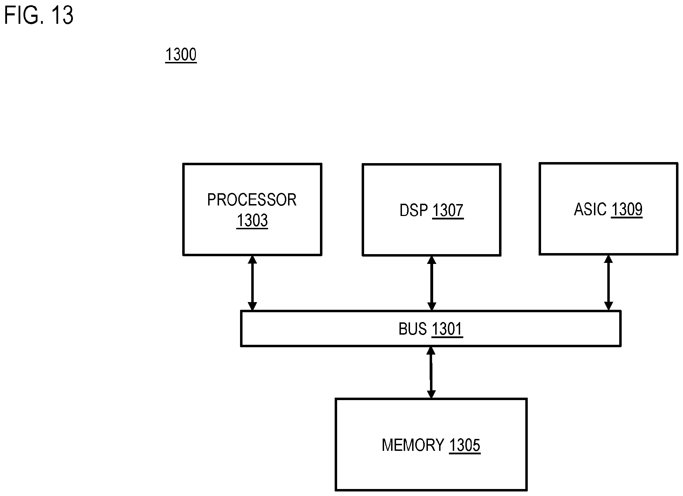

FIG. 3 is a flowchart of a process for visualizing risk levels for aerial vehicle flights, according to one embodiment. In various embodiments, the mapping platform 117 and/or any of the modules 201-213 of the mapping platform 117 may perform one or more portions of the process 300 and may be implemented in, for instance, a chip set including a processor and a memory as shown in FIG. 13. As such, the mapping platform 117 and/or the modules 201-213 can provide means for accomplishing various parts of the process 300, as well as means for accomplishing embodiments of other processes described herein in conjunction with other components of the system 100. Although the process 300 is illustrated and described as a sequence of steps, its contemplated that various embodiments of the process 300 may be performed in any order or combination and need not include all of the illustrated steps.

In step 301, the routing module 201 determines a flight path or potential flight path of an aerial vehicle 101. The flight path, for instance, can be determined using any routing engine known in the art based on an origin and destination specified by a pilot of the aerial vehicle 101 for the route at a given time (e.g., expected start time of the route).

In step 303, the data ingestion module 203 retrieves risk-related related data on the flight path and areas within a threshold distance of the flight path for the given time specified in step 301. By way of example, the risk-related data includes but is not limited to at least one of any the following risk factors:
- Population density data;
- Electromagnetic field data;
- Data on an absence of location signals;
- Weather data;
- Network coverage data; and
- Aviation related data.

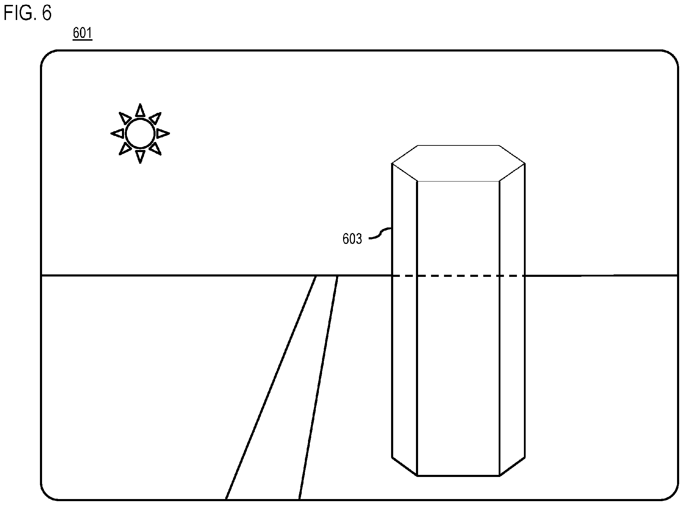

In one embodiment, the data ingestion module 203 can sense, determine, retrieve, and/or query a geographic database 121 or equivalent for the any of the risk factors. For example, population density data can be calculated according to the embodiments describe with respect to FIGs. 6-9 below. As described above, population density is a risk factor because aerial flights over areas with high population density (e.g., population density above a threshold value) can result in increased risks of casualties if the aerial vehicle 101 crashes in the area during a flight. Therefore, by avoiding flying over populated areas, the safety risks can be reduced.

Electromagnetic field data can also be sensed used using sensors located on aerial vehicles 101, in the infrastructure (e.g., smart city infrastructure), and/or from any other sensor in the area of interest. In addition or alternatively, historical or previously sensed electromagnetic data that has been stored for the areas of interest along the flight path can be stored and retrieved from the geographic database 121. In one embodiment, the electromagnetic field data can be used to determine whether electromagnetic fields in the areas of the flight path can adversely affect flight safety, for instance, by interfering with navigation systems, sensors, components, etc. onboard the aerial vehicle 101.

Data on the absence of GPS or other location signals in the areas of interest can also be sensed or retrieved from the geographic database 121. Areas with no or low GPS reception or equivalent (e.g., areas with high multi-path signal interference) can cause the aerial vehicle 101 to have inaccurate positioning information. This, in turn, can increase the risks of potential collisions with obstacles or of deviating from planned flight paths into unknown areas.

Weather data (e.g., winds or other weather conditions) can retrieved from weather services or applications provided by the services platform 111 and/or any of the services 113a-113n. Wind or weather conditions that exceed the operational capability of the aerial vehicle 101 can cause the aerial vehicle 101 to be more susceptible to being blown off course or into other objects, or from weather related damage (e.g., lightning strikes, hail damage, snow, etc.).

Network coverage data can be retrieved from the communication network 109, services platform 111, and/or services 113a-113n. Network coverage data can include cellular or other data network signal strength or availability. Losing communications connections between the aerial vehicle 101 and a corresponding remote pilot, remote operator, or remote data service can increase safety risks.

Finally, aviation-related data such as air traffic, flight restrictions, etc. can be retrieved from the services platform 111, services 113a-113n, and/or geographic database 121. By way of example, increased air traffic in areas of the flight path can increase safety risks because there could be more potential other aerial vehicles that can pose collision risks to the aerial vehicle 101.

It is noted that the above risk factors are provided by way of illustration and not as limitations. It is contemplated that data on any other location-based risk factor that can affect the safety of aerial flight over an area of interest can be sensed or retrieved according to the embodiments described herein.

After aggregating risk-related data for a flight path or potential flight path of interest, the risk module 205 calculates at least one risk area along the flight path based on risk-related data associated with the flight path. The at least one risk area corresponds to a geographic area to be represented by a virtual obstacle object. For example, the risk area can be defined as a hexagon or any other shape (e.g., rectilinear polygon, Voronoi shape, etc.). The risk area is defined as forming the footprint of the virtual obstacle object. In one embodiment, the size of the hexagon or shape (e.g., the extent of the geographic area represented by or corresponding to the shape) can be based on the density of the available risk-related data for a given area. For example, given thresholds on confidence levels and/or number of observations of risk-related data for the area, the risk module 205 determines the size of the hexagon or other shape (e.g., by picking the minimum possible size of the hexagon or shape that meets the confidence or observation thresholds). A smaller hexagon or shape size provides for higher resolution of the aggregated risk data and resulting virtual obstacle object, meaning that there is sufficient data density to support the higher resolution. Conversely, in areas where risk-related data is more sparse, the size of the hexagon or shape can increase to reflect a significant decrease in the confidence of the predicted risk level and/or the number of observations of risk factors for the area.

In step 305, the visualization module 207 generates a representation of the at least one risk area as a virtual obstacle object. The visualization module is configured to predict a risk level for a given area based on the aggregated risk factors of the area. In one embodiment, the visualization module 207 can use a trained machine learning model 211 or equivalent to predict said risk level. For example, the trained machine learning model 211 can be trained using aggregated ground truth risk-related data that has been labeled or annotated with a known or ground-truth risk level. The risk factors aggregated from areas of interest under or near the flight path or potential flight path can be used as input features to the trained machine learning module 211 to output a risk level prediction and optionally a corresponding confidence level of the prediction.

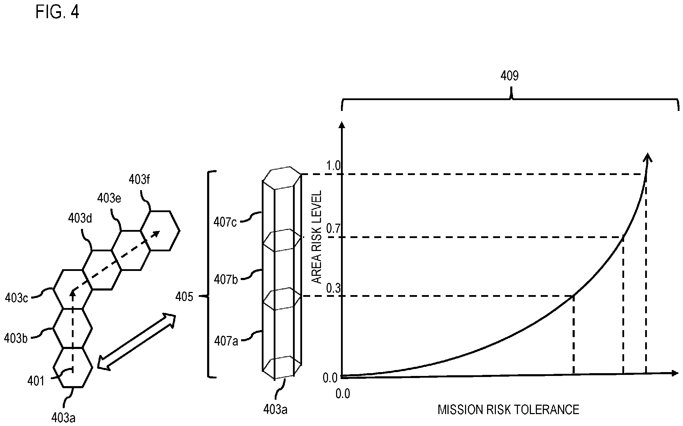

The visualization module 207 generates the representation as virtual obstacle object that is vertical 3D volume with a hexagonal or other shaped footprint corresponding to the area of interest extending up into the airspace with the height of the object based on the calculated risk level. The height of the virtual obstacle object is proportional to the risk level. FIG. 4 is a diagram illustrating an example virtual obstacle object, according to one embodiment. In the example of FIG. 4, the mapping platform 117 receives or generates a flight path 401 that passes over the geographic areas corresponding to hexagons 403a-403f. For each area of interest of the corresponding hexagons 403a-403f, the mapping platform 117 aggregates the risk factors for a time associated with the flight path 401 (e.g., time that the aerial vehicle 101 is expected to pass over each of the hexagons 403a-403f). The mapping platform 117 then generates a virtual obstacle object representation of each hexagon 403a-403f according to the embodiments described herein. As shown, a virtual obstacle object representation 405 is generated for the area corresponding to hexagon 403a.

In this case, the aggregated risk factors result in a maximum calculated risk (e.g., normalized to a maximum of 1.0 in a range from 0.0 to 1.0) so that the virtual obstacle object 405 has a maximum height of three risk units 407a-407c with each unit representing respectively risk levels of 0.0-0.3, 0.3-0.7, and 0.7-1.0 as indicated in the risk graph 409 which plots area risk level against a mission risk tolerance. In one embodiment, the risk ranges for the units 407a-407c of the virtual obstacle object 405 can depend color coded (e.g., unit 407a = green, unit 407b = yellow, unit 407c = red). By way of example, the color coding can include but is not limited to: (1) a first color (e.g., green) corresponding to a computed level risk that is lower than a given input threshold risk level; (2) a second color (e.g., yellow) corresponding to a computed risk level that is higher than the given input threshold risk level but lower than a second threshold level that is lower than a maximum risk level; and (3) a third color (e.g., red) corresponding to a computed risk level that is higher than the second threshold level up to the maximum risk level.

In this way, pilots or other users can identify green objects as free to fly, yellow objects able to fly but with conditions (e.g., a flight path may pass through no more than a maximum number of yellow objects in one flight), and red objects as objects to avoid. In on embodiment, the ranges used for classifying objects into the different categories can depend on the mission, pilot, application, etc. For example, a police rescue mission could possibly have different risk tolerances than a package delivery mission, leading to the green color of the object 405 (or first unit 407a risk range) to go higher for the police mission to represent a bigger mission acceptable risk level compared to other types of missions (e.g., as represented by the curve shown on the risk graph 409).

In step 307, the visualization module 207 can then render the generated virtual obstacle object in a user interface of a device in relation to the flight path or other path of travel. For example, the virtual obstacle object can be rendered in a mapping display so that the object corresponds to a real-world location associated with the computed risk level. Visualization or rendering of the virtual obstacle object could be offered on a plurality of user interfaces for various purposes including but not limited to: (1) an application for trip planning (e.g., on a desktop computer or device); (2) an augmented reality (AR) view for live visualization by the pilot, co-pilot, and/or any other user; (3) an on-device dashboard interface; (4) an autonomous system use (e.g., for people in the vehicle 10, other data post processing uses, etc.); and/or the like.

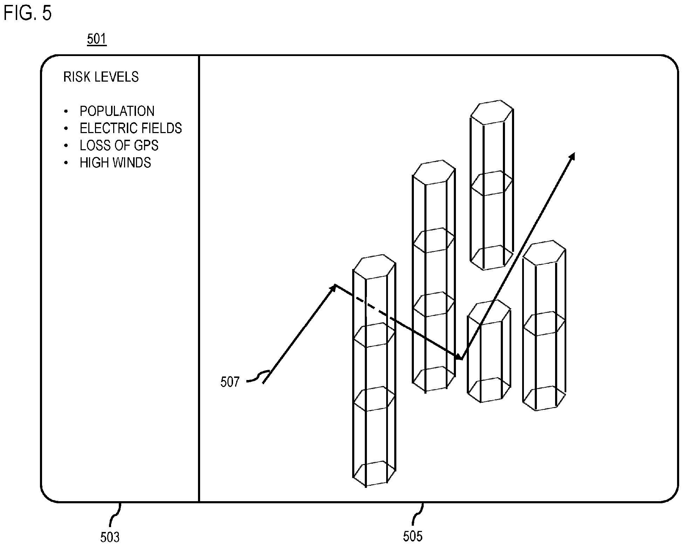

FIG. 5 is a diagram of a trip planning user interface (UI) 501 for visualizing risk levels for aerial vehicle flights, according to one embodiment. In this example, the UI 501 includes a first element 503 for presenting information on how the risk levels were calculated. For example, the element 503 lists the risk factors (e.g., population, electric fields, loss of GPS, and high winds) that were considered in computing the risk levels represented on the element 505. Element 505b displays the rendered virtual obstacle objects determined over areas around or near the flight path 507. In this way, the flight path 507 can be drawn or computed to avoid passing through any of the virtual obstacle objects to minimize safety risks over the flight path 507. For example, the mapping platform 117 can initiate a generation of a different flight path based on determining that a risk level associated with a current or potential flight path is above a risk threshold.

It is noted that the representation as illustrated in UI 501 is not a heatmap simply based on population. Ideally, for trip planning, a pilot would pick a route which has no risk volume or virtual obstacle object on the flight path (e.g., no crossing of any rendered risk object). If that is not possible, the pilot could then take the route with the lowest risk (e.g., crossing objects with lower risk levels). This is especially useful when the pilot needs to adapt to changing conditions while flying (e.g., during rerouting of a flight path) as the pilot will need to make very quick decisions on-the-fly.

FIG. 6 is a diagram of an augmented reality (AR) user interface 601 for visualizing risk levels for aerial vehicle flights, according to one embodiment. In this example, the AR UI 601 is presented on an AR device worn by a pilot of the aerial vehicle 101 that shows a live view from the aerial vehicle 101. The mapping platform 117 can then overlay a rendering of any virtual objects (e.g., object 603) determined to present a risk above a threshold risk level and is in the flight path of the aerial vehicle 101. In this case, the mapping platform 117 renders the object 603 so that it appears at a location and size corresponding to the computed risk and area from which the risk factors were aggregated. It is noted that the object 603 is a virtual rendering so that if the pilot continues to fly through the object 603, the AR UI 601 will give the pilot a visual sensation of flying into the object 603. The visual effect of "flying into something" can be used to discourage pilots from entering such areas, without there having to necessarily be a direct physical correspondence to the virtual obstacle object. In other words, the system 100 can surface risks originating at ground level through virtual 3D volumes extending into the airspace. In an urban environment, the height of the volumes or objects serves as a signal to the pilot to fly over or around, so that flying over alternate areas can reduce safety risks because the area of potential air crashes is distributed across less populated areas.

In one embodiment, as described above, the calculated risk levels for the areas of interest can be time sensitive. In other words, the level of risk can be a function of time by updating the risk-related data collected from the areas of interest in real-time, continuously, periodically, according to a schedule, or a combination thereof. The updated risk-related data or risk factors can then be used to update the risk area associated with the flight path, the virtual obstacle object, the flight path, or a combination thereof. In this way, the visualization module 207 can dynamically adjust at least one dimension (e.g., height) of the virtual obstacle object as function of time.

The embodiments of visualizing risk levels or aerial vehicle flights described herein provide for several advantages. For example, quickly presenting or displaying risks makes aerial flights safer for all (e.g., pilot, passengers, and people on the ground). The unique visualization also is more convenient and efficient for pilots to plan flying journeys. The intuitive presentation also enables faster reaction time for pilots who need to react to changing conditions during a flight. As another advantage, the embodiments of virtual obstacle objects surface risk data or risk factors which is often invisible to the naked eye.

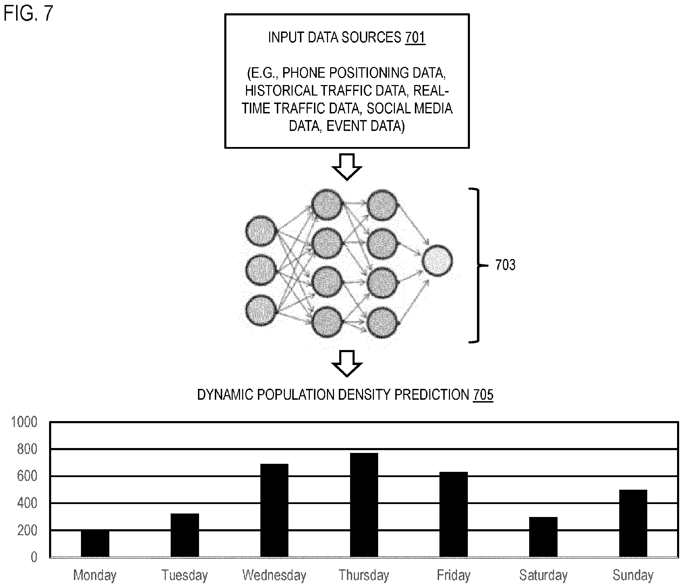

In one embodiment, determining dynamic population density for calculating risks can be a significant technical challenge. The system 100 introduces a further capability to predict population in a given area at a certain time (e.g., time in the future). FIG. 7 is a diagram of an overview of providing dynamic population density data, according to one embodiment. In one embodiment, the system 100 collects data from and learns from various input data sources 701 to train a machine learning model 703 (e.g., neural network or equivalent) to make a dynamic population density prediction 705. In one embodiment, the various input data sources 701 related to data reported or sensed that indicate human activity in various areas of interest. Various data sources 701 can be used for modeling including but not limited to any combination: phone positioning data (e.g., from phone probes such as probe data collected user equipment (UE) 107, from mobile or cellular operators over a communication network 109); historical and/or traffic data (e.g., collected from traffic sensors, crowd-source reports, etc.); social media data (e.g., collected from social media services such as those provided by a services platform 111 and/or any of the services 113a-113n of the services platform 111); event data (e.g., collected from the services platform 111 and/or content providers 115a-115m); public transport data (e.g., collected from the services platform 111 and/or content providers 115a-115m), smart cities data (e.g., collected from the services platform 111 and/or content providers 115a-115m).

In one embodiment, the various data sources 701 are collected for an area of interest. The sources 701 are then used as inputs into a machine learning model 703 that has been trained to generate the dynamic population density prediction 705 for the selected area of interest at a selected time (e.g., in the future or the past). In the example of FIG. 7, the data from the input data sources 701 has been used by the machine learning model 703 to predict population density differentiated based on the days of the week (e.g., Monday-Sunday). As shown, the dynamic population density prediction 705 indicates that the peak population density for the area of interest occurs on Thursday and the minimum population density occurs on Monday. It is noted that the differentiation categories (e.g., day of the week) is provided by way of illustration and not as limitations. Accordingly, the machine learning model 703 can be used to make dynamic population density predictions differentiated across any time period or other specified factor (e.g., occurrence of an event in the area of interest).

The system 100 can provide the dynamic population density prediction 705 directly to a requesting service or application (e.g., for aerial vehicle routing, POI determination, urban planning, etc.), or can provide any type of visualization or representation of dynamic population density prediction 705.

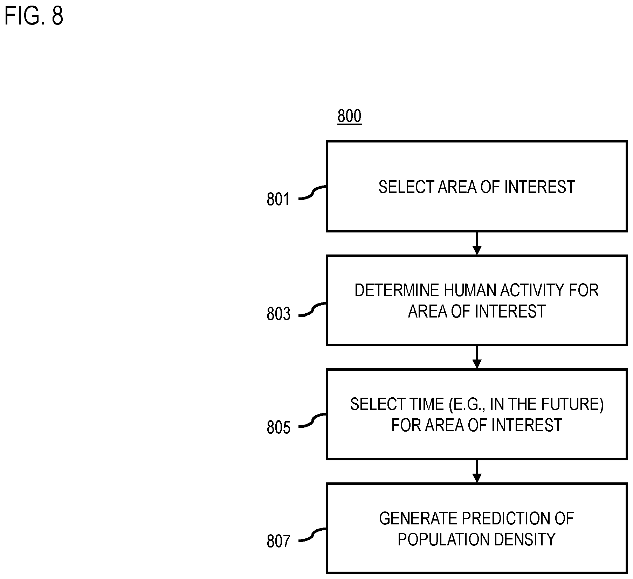

FIG. 8 is a flowchart of a process for providing dynamic population density based on human activity data, according to one embodiment. In various embodiments, the mapping platform 117 and/or any of the modules 201-213 of the mapping platform 117 may perform one or more portions of the process 400 and may be implemented in, for instance, a chip set including a processor and a memory as shown in FIG. 13. As such, the mapping platform 117 and/or the modules 201-213 can provide means for accomplishing various parts of the process 800, as well as means for accomplishing embodiments of other processes described herein in conjunction with other components of the system 100. Although the process 800 is illustrated and described as a sequence of steps, its contemplated that various embodiments of the process 800 may be performed in any order or combination and need not include all of the illustrated steps.

In step 801, the data ingestion module 203 selects an area of interest. The area of interest can include any location or area for which a dynamic population density is to be predicted. The area can be specified as a point location with a surround radius, as a bounded area, etc. The area of interest can also be specified as a point of interest (e.g., a building, structure, park, etc.) or geopolitical boundary (e.g., neighborhood, city, state, region, country, etc.).

In step 803, the data ingestion module 203 retrieves or otherwise determines human activity data for the location. Human activity data includes any data that can be sensed, reported, recorded, stored, etc. that is associated with or indicative of any human activity or action that is occurring within the area of interest. In one embodiment, human activity data does not include static census data or a direct population count. The data ingestion module 203 can determine the human activity data from any of a plurality of data sources. These data sources can be provided, for instance, by the services platform 111, services 113a-113n (also collectively referred to as services 113), content providers 115a-115m (also collectively referred to as content providers 115), and/or equivalent platforms. By way of example, the plurality of data sources can include but is not limited to any combination or subset of:
- Positioning data from a mobile device (e.g., UE 107);
- Traffic data;
- Public transport routing request data;
- Smart city data;
- Mobile communications operator data;
- Social media data; and
- Event data.

For example, positioning data from mobile devices can include phone probes (e.g., UEs 107 acting as probe devices) operating within the selected area of interest. Probes, for instance, are UEs 107 that have been configured to report location tracking data to the mapping platform 107 (e.g., for mapping, real-time traffic reporting, real-time incident reporting, etc.). The positioning data can include but is not limited to raw location data (e.g., latitude, longitude, altitude) and/or map-matched locations.

Traffic data can include both pedestrian and vehicular traffic sensed or reported in the area of interest. The traffic data can include both historical and real-time data. Such traffic data can be gathered from in-road traffic sensors, traffic cameras, phone or vehicle probe data, crowd-sourced reporting, and/or the like. Moreover, traffic data can include traffic volume, traffic speed, traffic type, traffic incidents, etc. occurring in the area of interest.

Public transport routing request data refers broadly to user requests for travel using other than user owned or operated private vehicles. Public transport can include but is not limited to buses, trains, taxis, shared vehicle services, ride hailing services, and/or any other mobility provider. The data ingestion module 203, for instance, can access or retrieve data on how many users are requesting or reserving public transport through their respective services. In addition or alternatively, the data ingestion module 203 can determine how many users are requesting routes using public transport from a mapping or navigation service.

Smart city data includes data collected from any number data collection sensors installed in and around a city to monitor resources such as but not limited to traffic and transportation systems, power plants, water supply networks, waste management, law enforcement, information systems, schools, libraries, hospital, and/or any other city resources. This smart city monitoring data can be used to determine human consumption of these resources as one example source of human activity data.

Mobile communications operator data include data collected by cellular or other wireless service providers operating in the area of interest. This data can include but is not limited to the number of user devices active in the area interest (e.g., pinging to or otherwise communicating with a cell tower).

Social media data can include location-based social media posts occurring in the area of interest. The data ingestion module can interface with social media services (e.g., via the services platform 111 and/or services 113) to extract data such as but not limited to volume of posts within certain time epochs, location check-in data, etc.

Event data can include any schedule event that is to occur in the area of interest. The event data can specify the type of event, time, duration, location, etc. Other data include but is not limited to event venue size, event traffic, etc.

In one embodiment, input features can be extracted from the human activity data to support dynamic population density prediction according to the embodiments described herein and then processed using the machine learning model 211.

In one embodiment, the prediction of the human population density is generated based on a trained machine learning model 211. The trained machine learning model 211, for instance, is trained using ground truth data correlating reference historical human activity data to ground truth population density data. Accordingly, in one embodiment, the data ingestion module 203 can acquire ground truth data from one or more locations that are similar to expected areas of interest. The ground truth data, for instance, correlates reference historical human activity data to ground truth population density data. Reference historical human activity data includes one or more input data sources with known values or parameters. The set of known human activity data values can be referred to as ground truth input feature sets. These feature sets can then be labeled with ground truth population data that reflects known population density data or population density data that has been accepted or otherwise treated as the true population of an area exhibiting the reference human activity data values.

In one embodiment, the data ingestion module 203 can use static census data as an approximation of ground truth in residential area during night time. Therefore, in some cases, the data ingestion module 203 can use this data as ground truth data form model training and/or validation purposes.

As discussed above, the machine learning model 211 uses training or ground truth data to automatically "learn" or detect relationships between different input feature sets and then output a predicted population density based on those feature sets. In one embodiment, at least one of the input features or values includes a temporal parameter that indicates the times at which the ground input feature sets and corresponding ground truth population densities was collected or determined. In this way, the trained machine learning model 211 can include time as a dynamic parameter so that the machine learning model 211 can learn the relationship between population density and time. For example, the dynamic parameter can provide for the prediction of the population density with respect to a time of day, a day, a week, a season, a year, or a combination thereof.

In one embodiment, the machine learning model 211 can be trained using the acquired ground truth training data set. For example, the mapping platform 117 can incorporate a supervised learning model (e.g., a logistic regression model, RandomForest model, and/or any equivalent model) to provide feature matching probabilities that are learned from the training data set. For example, during training, the prediction module 209 uses a learner module that feeds input feature sets from the ground truth training data set into the machine learning model 211 to compute a predicted population density using an initial set of model parameters. The learner module then compares the predicted matching probability of the predicted population density feature to the ground truth population density data for each input feature set in the ground truth training data set. The learner module then computes an accuracy of the predictions for the initial set of model parameters. If the accuracy or level of performance does not meet a threshold or configured level, the learner module incrementally adjusts the model parameters until the model generates predictions at a desired or configured level of accuracy with respect to the ground truth population density labels in the training data (e.g., the ground truth data). In one embodiment, adjusting model parameters and learning the relationships between input features and population density predictions also includes determining relative weighting information for the input data sources from which the human activity data were collected. The prediction of the population density can then be further based on the relative weighting information among the input features to train the machine learning model 211. A "trained" machine learning model 211 is then is a classifier with model parameters adjusted to make accurate predictions of population density with respect to the training data set.

To use the trained machine learning model 211 to make predictions, in step 805, the prediction module 209 selects or receives an input for selecting a time for which the dynamic population density prediction is to be made. The selected time can be any time in the future or the past. For example, in an aerial vehicle 101 use case, a future time can be selected to correspond to when the aerial vehicle 101 is expected to arrive or fly over the selected area of interest to assist in assessing the safety risk associated with a given flight path or plan. If the time is a past time, the machine learning model 211 can be used to predict or estimate what the population density was at the specified time in the past.

In yet another embodiment, the prediction module 209 can select, determine, or receive an input for selecting an event that is expected to occur in the area of interest at the selected time. The machine learning model 211 can then be used to predict the population density based on the occurrence or predicted occurrence of the event in the area of interest at the selected time.

In step 807, the prediction module 209 generates a prediction of a population density in the area of interest at a selected time based on the human activity data collected from the area of interest as described with respect to step 401 above. For example, the prediction module 209 can generate or receive an input feature set extracted from the human activity data collected from the area of interest. The input feature set can be an input vector including values representative of the different collected data sources. The input feature set (including the selected time for which the prediction is to be made, along with a specified event if any) is then fed into the trained machine learning model 211 to generate the dynamic population density prediction. In one embodiment, the dynamic population density can be expressed as a total number of people predicted to be in the area of interest at the selected time and/or for the selected event, or any other equivalent population metric.

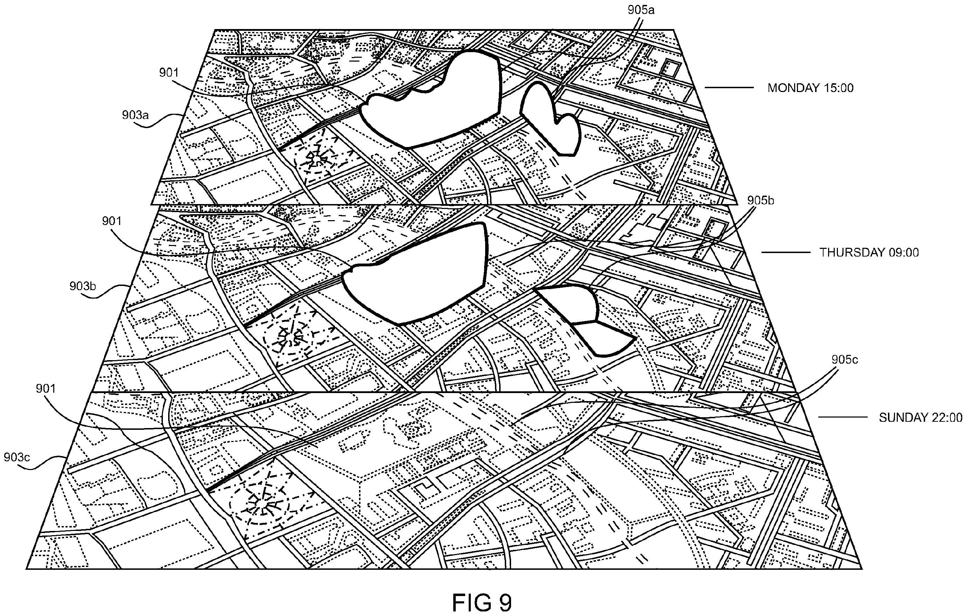

In one embodiment, after generating the dynamic population density data or prediction, the output module 213 can generate a visual representation of the population density. One example of such a visual representation is shown in FIG. 9 which is a diagram of an example three-dimensional representation of dynamic population density data, according to one embodiment. In the example of FIG. 9, the mapping platform 117 has generated three population density predictions for an area of interest 901 at three respective times: Monday at 15:00 as shown in visualization 903a, Thursday at 09:00 as shown in visualization 903b, and Sunday at 22:00 as shown visualization 903c. The population density predictions were generated according to the various embodiments described herein and resulted in a prediction that the area 901 will have high population density on Monday at 15:00. In this example, the mapping platform 103 has generated and rendered a visual representation 905a of the population density prediction in visualization 903a which extends a dimension of the representation (e.g., vertical) in proportion to the population density. The population density prediction for Thursday at 09:00 is for medium population density, and the mapping platform 117 has rendered the corresponding representation 905b with less height than representation 905a in visualization 903b. Finally, the population density prediction for Sunday at 22:00 is for low population density, and the mapping platform 117 has rendered the corresponding representation 905c with no height in visualization 903c.

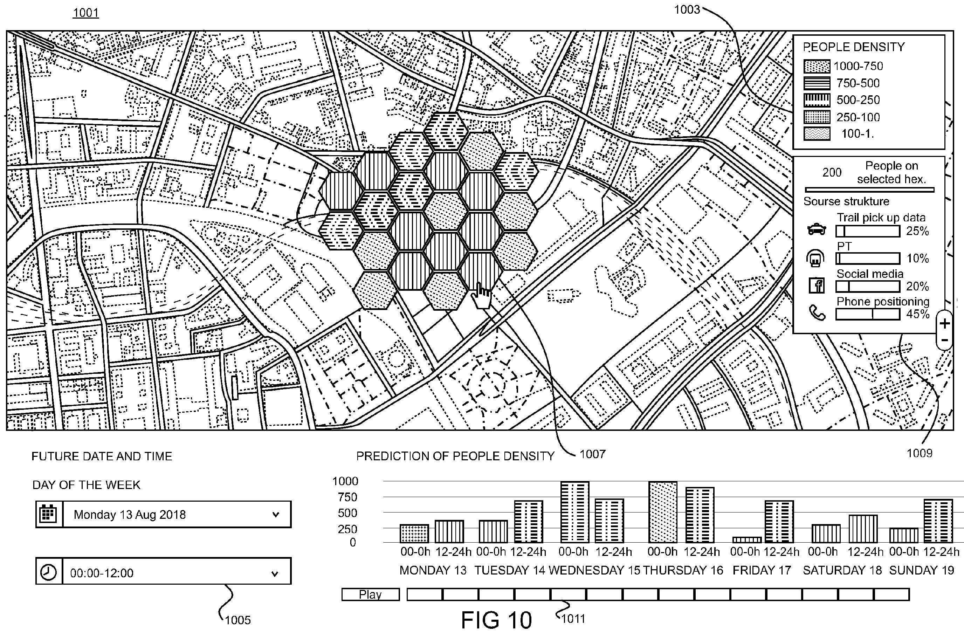

FIG. 10 is a diagram of another example user interface (UI) 1001 for providing dynamic population density data, according to one embodiment. In this example, the UI 1001 includes a map element that presents a map displaying several areas of interest for population density prediction. These areas are indicated by hexagons. The mapping platform 117 has generated a dynamic population density prediction for each area corresponding to each hexagon and shaded the hexagon to indicate the population prediction as shown in the legend element 1003 with the prediction made for the time specified input in the element 1005. It is noted that the visualization method for the areas of interest can be any other shape than a hexagon including but not limited to square polygons, Voronoi shapes, etc. Each of the hexagons is selectable to provide additional details of the dynamic population prediction. As shown, the user has selected hexagon 1007. In response, the UI 1001 presents human activity element 1009 to show the human activity data sources associated with the area of the hexagon 1007 (e.g., taxi pickup data, public transport data data, social media data, and phone positioning data). The UI 1001 also presents a prediction element 1011 to show additional population density predictions for time periods and days extending one week from selected date of Monday, 13 August 2018 shown in element 1005.

In one embodiment, the mapping platform 117 can use dynamic population density predictions to enable an "autonomous world" to fly aerial vehicles and drones (e.g., manned or unmanned) away from populated areas to reduce safety risks to people under the aerial vehicles' flight paths. Unlike traditional static census data traditionally used by aviation companies to estimate ground risk fatalities, the embodiments described herein for dynamic population density predictions provide more accurate estimates and reduce the risk of potential fatalities by routing the aerial vehicles to avoid densely populated areas (e.g., areas with predicted population densities above a threshold value) as described below.

In one embodiment, the mapping platform 117 receives a request to generate a route for an aerial vehicle that avoids densely populated areas. The request, for instance, can identify at least a destination and/or origin for computing the route, and optionally a population density threshold over which an aerial vehicle should avoid flying. The mapping platform 117 can use any routing engine to compute candidate routes along with estimated times of arrivals (ETAs) at various locations along the candidate routes. The mapping platform 117 can then predict dynamic population densities at each of the various locations at a corresponding ETA. The mapping platform 117 can then select or recommend the route from the candidate routes that flies over the least amount of people or avoids areas with predicted population densities above the applicable threshold.

For example, the aerial vehicle route can include a flight path or route constructed, at least in part, from various flight variables including but not limited to approach angle, height, distance to populated areas (e.g., determined based on dynamic population density predictions), locations where the drone rises or descends, etc. When considering real-time data, the route can also be generated to recommend or specify time slots to execute the route to reduce or avoid population dense areas. If an appropriate time slot or if time flight time cannot be changed, the mapping platform 117 can generate route to minimize overflight of population dense areas.

After generating the route, the route or multiple candidate routes can be transmitted to the aerial vehicle or drone or a device of the vehicle operator (e.g., UE 107 via an application 119 for controlling the aerial vehicle 101) for selection or execution by the drone.

Returning to FIG. 1, as shown, the system 100 comprises an aerial vehicle 101 equipped with a variety of sensors that is capable operating in airspaces over populated or unpopulated areas. In one embodiment, the aerial vehicle 101 can fly or otherwise operate autonomously or under direct control via the UE 107 that may include or be associated with one or more software applications 119 supporting routing based on risk level predictions and/or visualizations according to the embodiments described herein. As previously discussed, the system 100 further includes mapping platform 117 coupled to the geographic database 121, wherein the mapping platform 117 performs the functions associated with visualizing risk levels, providing dynamic population density prediction, and/or aerial vehicle routing as discussed with respect to the various embodiments described herein. In one embodiment, the aerial vehicle 101, mapping platform 117, UE 107, and other components of the system 100 have connectivity to each other via the communication network 109.

In one embodiment, the aerial vehicle 101 is capable of operating autonomously or via a remote pilot using UE 107 to fly the aerial vehicle 101 or configure a flight path or route for the aerial vehicle 101. In one embodiment, the aerial vehicle 101 is configured to travel using one or more modes of operation over population or unpopulated areas. The aerial vehicle 101 many include any number of sensors including cameras, recording devices, communication devices, etc. By way example, the sensors may include, but are not limited to, a global positioning system (GPS) sensor for gathering location data based on signals from a positioning satellite, Light Detection And Ranging (LIDAR) for gathering distance data and/or generating depth maps, a network detection sensor for detecting wireless signals or receivers for different short-range communications (e.g., Bluetooth^{®}, Wireless Fidelity (Wi-Fi), Li-Fi, Near Field Communication (NFC), etc.), temporal information sensors, a camera/imaging sensor for gathering image data, and the like. The aerial vehicle 101 may also include recording devices for recording, storing, and/or streaming sensor and/or other telemetry data to the UE 107 and/or the mapping platform 117 for mapping or routing.

In one embodiment, the aerial vehicle 101 is capable of being configured with and executing at least one route based on visualized risk levels, dynamic population density predictions according to the embodiments described herein. The aerial vehicle 101 can also be configured avoid areas with high risk levels, populated areas, objects, and/or obstructions. In addition, the aerial vehicle 101 can be configured to observe restricted paths or routes. For example, the restricted paths may be based on governmental regulations that govern/restrict the path that the aerial vehicle 101 may fly (e.g., Federal Aviation Administration (FAA) policies regarding required distances between objects). In one embodiment, the system 100 may also take into account one or more pertinent environmental or weather conditions (e.g., rain, water levels, sheer winds, etc. in and around underground passageways and their entry/exit points) in determining a route or flight path.

In one embodiment, the aerial vehicle 101 may determine contextual information such as wind and weather conditions in route that may affect the aerial vehicle 101's ability to follow the specified route and then relay this information in substantially real-time to the system 100. In one embodiment, the aerial vehicle 101 may request one or more modifications of the flight path based, at least in part, on the determination of the contextual information or a change in the real-time calculated risk levels over areas of interest (e.g., newly detected or updated risk factors causing a sudden and unexpected change in risk levels). In one embodiment, the system 100 creates a data object to represent the aerial route and may automatically modify the route data object based on receipt of the contextual information from the aerial vehicle 101 or another source and then transmit the new route object to the aerial vehicle 101 for execution. In one embodiment, the aerial vehicle 101 can determine or access the new route data object and/or determine or access just the relevant portions and adjust its current path accordingly. For example, if multiple highly dense population areas (e.g., buildings) are encountered, the system 100 may condense the width of the aerial vehicle 101's flight path to better ensure that the aerial vehicle 101 will avoid the closely situation population-dense areas.

By way of example, a UE 107 is any type of dedicated aerial vehicle control unit, mobile terminal, fixed terminal, or portable terminal including a mobile handset, station, unit, device, multimedia computer, multimedia tablet, Internet node, communicator, desktop computer, laptop computer, notebook computer, netbook computer, tablet computer, personal communication system (PCS) device, personal navigation device, personal digital assistants (PDAs), audio/video player, digital camera/camcorder, positioning device, television receiver, radio broadcast receiver, electronic book device, game device, or any combination thereof, including the accessories and peripherals of these devices, or any combination thereof. It is also contemplated that a UE 107 can support any type of interface to the user (such as "wearable" circuitry, etc.). In one embodiment, a UE 107 may support any type of interface for piloting or routing the aerial vehicle 101. In addition, a UE 107 may facilitate various input means for receiving and generating information, including, but not restricted to, a touch screen capability, a keyboard and keypad data entry, a voice-based input mechanism, and the like. Any known and future implementations of a UE 107 may also be applicable.

By way of example, the UE 107 and/or the aerial vehicle 101 may execute applications 119, which may include various applications such as a risk visualization application, an aerial routing application, a location-based service application, a navigation application, a content provisioning application, a camera/imaging application, a media player application, an e-commerce application, a social networking application, and/or the like. In one embodiment, the applications 119 may include one or more feature applications used for visualizing risk levels according to the embodiments described herein. In one embodiment, the application 119 may act as a client for the mapping platform 117 and perform one or more functions of the mapping platform 117. In one embodiment, an application 119 may be considered as a Graphical User Interface (GUI) that can enable a user to configure a route or flight path for execution by aerial vehicle 101 according to the embodiments described herein.

In one embodiment, the communication network 109 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (WiFi), wireless LAN (WLAN), Bluetooth^{®}, Internet Protocol (IP) data casting, satellite, mobile ad-hoc network (MANET), and the like, or any combination thereof.

In one embodiment, the mapping platform 117 can interact with the services platform 111 to receive data (e.g., human activity data from a plurality of data sources.) for providing routing or operation of the aerial vehicle 101 based on dynamic population density predictions. By way of example, the services platform 111 may include one or more services 113 for providing content (e.g., human activity data, ground truth data, etc.), provisioning services, application services, storage services, mapping services, navigation services, contextual information determination services, location-based services, information-based services (e.g., weather), etc. By way of example, the services 113 may provide or store non-drone traffic schedule data (e.g., train/subway schedules, etc.), weather data, water level schedules, and/or other data used by the embodiments describe herein. In one embodiment, the services platform 111 may interact with the aerial vehicle 101, UE 107, and/or mapping platform 117 to supplement or aid in providing dynamic population density predictions.

By way of example, the aerial vehicle 101, UE 107, mapping platform 117, and the services platform 111 communicate with each other and other components of the system 100 using well known, new or still developing protocols. In this context, a protocol includes a set of rules defining how the network nodes within the system 100 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

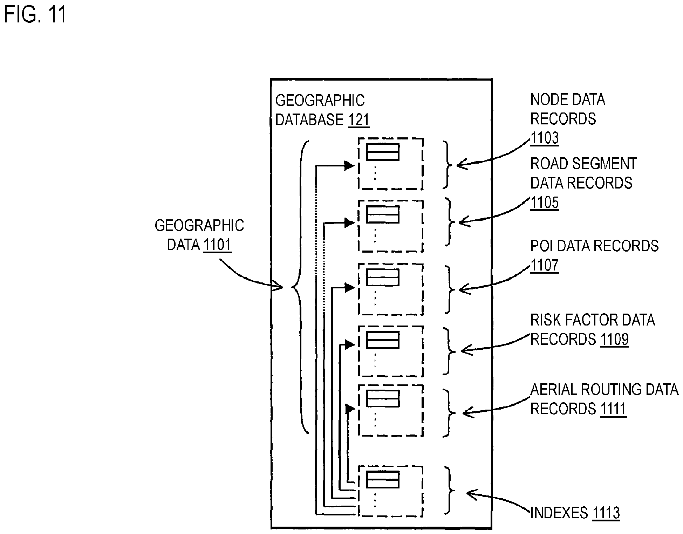

FIG. 11 is a diagram of a geographic database 121 capable of storing map data for dynamic population density predictions, according to one embodiment. In one embodiment, the geographic database 121 includes geographic data 1101 used for (or configured to be compiled to be used for) mapping and/or navigation-related services, such as for routing aerial vehicles based on population density data to create a 3D flightpath or route.

In one embodiment, geographic features (e.g., two-dimensional or three-dimensional features) are represented using polygons (e.g., two-dimensional features) or polygon extrusions (e.g., three-dimensional features). For example, the edges of the polygons correspond to the boundaries or edges of the respective geographic feature. In the case of a building, a two-dimensional polygon can be used to represent a footprint of the building, and a three-dimensional polygon extrusion can be used to represent the three-dimensional surfaces of the building. It is contemplated that although various embodiments are discussed with respect to two-dimensional polygons, it is contemplated that the embodiments are also applicable to three-dimensional polygon extrusions, models, routes, etc. Accordingly, the terms polygons and polygon extrusions/models as used herein can be used interchangeably.

In one embodiment, the following terminology applies to the representation of geographic features in the geographic database 121.

"Node" - A point that terminates a link.

"Line segment" - A straight line connecting two points.

"Link" (or "edge") - A contiguous, non-branching string of one or more line segments terminating in a node at each end.

"Shape point" - A point along a link between two nodes (e.g., used to alter a shape of the link without defining new nodes).

"Oriented link" - A link that has a starting node (referred to as the "reference node") and an ending node (referred to as the "non reference node").

"Simple polygon" - An interior area of an outer boundary formed by a string of oriented links that begins and ends in one node. In one embodiment, a simple polygon does not cross itself.

"Polygon" - An area bounded by an outer boundary and none or at least one interior boundary (e.g., a hole or island). In one embodiment, a polygon is constructed from one outer simple polygon and none or at least one inner simple polygon. A polygon is simple if it just consists of one simple polygon, or complex if it has at least one inner simple polygon.

In one embodiment, the geographic database 121 follows certain conventions. For example, links do not cross themselves and do not cross each other except at a node. Also, there are no duplicated shape points, nodes, or links. Two links that connect each other have a common node. In the geographic database 121, overlapping geographic features are represented by overlapping polygons. When polygons overlap, the boundary of one polygon crosses the boundary of the other polygon. In the geographic database 121, the location at which the boundary of one polygon intersects they boundary of another polygon is represented by a node. In one embodiment, a node may be used to represent other locations along the boundary of a polygon than a location at which the boundary of the polygon intersects the boundary of another polygon. In one embodiment, a shape point is not used to represent a point at which the boundary of a polygon intersects the boundary of another polygon.

As shown, the geographic data 1101 of the database 121 includes node data records 1103, road segment or link data records 1105, POI data records 1107, risk factor data records 1109, aerial routing data records 1111, and indexes 1113, for example. More, fewer or different data records can be provided. In one embodiment, additional data records (not shown) can include cartographic ("carto") data records, routing data, and maneuver data. In one embodiment, the indexes 1113 may improve the speed of data retrieval operations in the geographic database 121. In one embodiment, the indexes 1113 may be used to quickly locate data without having to search every row in the geographic database 121 every time it is accessed. For example, in one embodiment, the indexes 1113 can be a spatial index of the polygon points associated with stored feature polygons.

In exemplary embodiments, the road segment data records 1105 are links or segments representing roads, streets, or paths, as can be used in the calculated route or recorded route information for determination of one or more personalized routes. The node data records 1103 are end points corresponding to the respective links or segments of the road segment data records 1105. The road link data records 1105 and the node data records 1103 represent a road network, such as used by vehicles, cars, and/or other entities. In addition, the geographic database 121 can contain path segment and node data records or other data that represent 3D paths around 3D map features (e.g., terrain features, buildings, other structures, etc.) that occur above street level, such as when routing or representing flightpaths of aerial vehicles (e.g., drones 101), for example.

The road/link segments and nodes can be associated with attributes, such as geographic coordinates, street names, address ranges, speed limits, turn restrictions at intersections, and other navigation related attributes, as well as POIs, such as gasoline stations, hotels, restaurants, museums, stadiums, offices, automobile dealerships, auto repair shops, buildings, stores, parks, etc. The geographic database 121 can include data about the POIs and their respective locations in the POI data records 1107. The geographic database 121 can also include data about places, such as cities, towns, or other communities, and other geographic features, such as bodies of water, mountain ranges, etc. Such place or feature data can be part of the POI data records 1107 or can be associated with POIs or POI data records 1107 (such as a data point used for displaying or representing a position of a city).

In one embodiment, the geographic database 121 can also include risk factor data records 1109 for the digital map data representing risk factors or risk-related data, calculated risk levels, risk level visualizations, dynamic population density predictions generated for areas or interest, and related data. In one embodiment, the risk factor data records 1109 can be associated with one or more of the node records 1103, road segment records 1105, and/or POI data records 1107 so that the predicted population densities can inherit characteristics, properties, metadata, etc. of the associated records (e.g., location, address, POI type, etc.). In one embodiment, the system 100 (e.g., via the mapping platform 117 can use the dynamic population density predictions to generate aerial vehicles routes.

In one embodiment, the system 100 is capable of generating aerial routes using the digital map data and/or real-time data stored in the geographic database 121 based on risk level visualization and/or predictions. The resulting aerial routing and guidance can be stored in the aerial routing data records 1111. By way of example, the routes stored in the data records 1111 can be created for individual 3D flightpaths or routes as they are requested by drones or their operators. In this way, previously generated aerial routes can be reused for future drone travel to the same target location.

In one embodiment, the aerial routes stored in the aerial routing data records 1111 can be specific to characteristics of the aerial vehicle 101 (e.g., drone type, size, supported modes of operation) and/or other population density characteristics of the route. In addition, the aerial routes generated according to the embodiments described herein can be based on contextual parameters (e.g., time-of-day, day-of-week, season, etc.) that can be used to different dynamic population density predictions according to the embodiments described herein.

In one embodiment, the geographic database 121 can be maintained by the services platform 111 and/or any of the services 113 of the services platform 111 (e.g., a map developer). The map developer can collect geographic data to generate and enhance the geographic database 121. There can be different ways used by the map developer to collect data. These ways can include obtaining data from other sources, such as municipalities or respective geographic authorities. In addition, the map developer can employ aerial drones (e.g., using the embodiments of the privacy-routing process described herein) or field vehicles (e.g., mapping drones or vehicles equipped with mapping sensor arrays, e.g., LiDAR) to travel along roads and/or within buildings/structures throughout the geographic region to observe features and/or record information about them, for example. Also, remote sensing, such as aerial or satellite photography or other sensor data, can be used.

The geographic database 121 can be a master geographic database stored in a format that facilitates updating, maintenance, and development. For example, the master geographic database or data in the master geographic database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data is compiled (such as into a platform specification format (PSF) format) to organize and/or configure the data for performing navigation-related functions and/or services, such as route calculation, route guidance, map display, speed calculation, distance and travel time functions, and other functions, by a navigation capable device or vehicle, such as by the aerial vehicle 101, for example. The navigation-related functions can correspond to 3D flightpath or navigation, 3D route planning for package delivery, or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases.

The processes described herein for visualizing risk levels associated with aerial vehicle flights may be advantageously implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

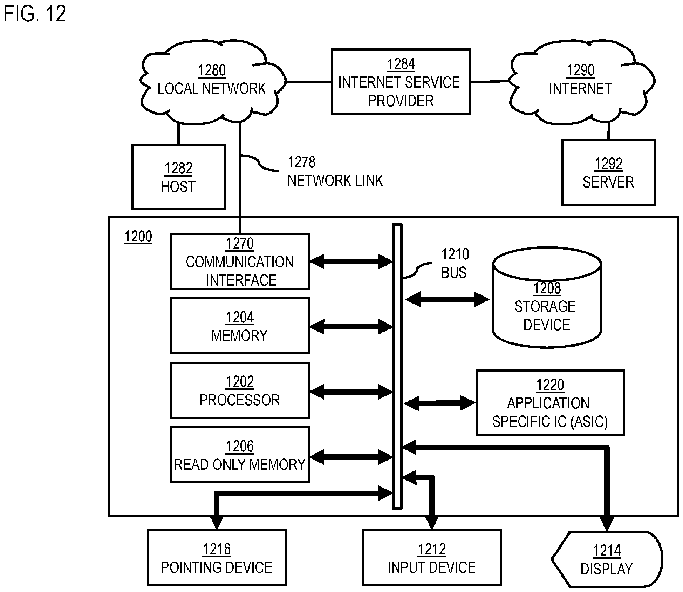

FIG. 12 illustrates a computer system 1200 upon which an embodiment of the invention may be implemented. Computer system 1200 is programmed (e.g., via computer program code or instructions) to visualize risk levels associated with aerial vehicle flights as described herein and includes a communication mechanism such as a bus 1210 for passing information between other internal and external components of the computer system 1200. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 1210 includes one or more parallel conductors of information so that information is transferred quickly among devices coupled to the bus 1210. One or more processors 1202 for processing information are coupled with the bus 1210.

A processor 1202 performs a set of operations on information as specified by computer program code related to visualizing risk levels associated with aerial vehicle flights. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 1210 and placing information on the bus 1210. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 1202, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 1200 also includes a memory 1204 coupled to bus 1210. The memory 1204, such as a random access memory (RAM) or other dynamic storage device, stores information including processor instructions for visualizing risk levels associated with aerial vehicle flights. Dynamic memory allows information stored therein to be changed by the computer system 1200. RAM allows a unit of information stored at a location called a memory address to be stored and retrieved independently of information at neighboring addresses. The memory 1204 is also used by the processor 1202 to store temporary values during execution of processor instructions. The computer system 1200 also includes a read only memory (ROM) 1206 or other static storage device coupled to the bus 1210 for storing static information, including instructions, that is not changed by the computer system 1200. Some memory is composed of volatile storage that loses the information stored thereon when power is lost. Also coupled to bus 1210 is a non-volatile (persistent) storage device 1208, such as a magnetic disk, optical disk or flash card, for storing information, including instructions, that persists even when the computer system 1200 is turned off or otherwise loses power.

Information, including instructions for visualizing risk levels associated with aerial vehicle flights, is provided to the bus 1210 for use by the processor from an external input device 1212, such as a keyboard containing alphanumeric keys operated by a human user, or a sensor. A sensor detects conditions in its vicinity and transforms those detections into physical expression compatible with the measurable phenomenon used to represent information in computer system 1200. Other external devices coupled to bus 1210, used primarily for interacting with humans, include a display device 1214, such as a cathode ray tube (CRT) or a liquid crystal display (LCD), or plasma screen or printer for presenting text or images, and a pointing device 1216, such as a mouse or a trackball or cursor direction keys, or motion sensor, for controlling a position of a small cursor image presented on the display 1214 and issuing commands associated with graphical elements presented on the display 1214. In some embodiments, for example, in embodiments in which the computer system 1200 performs all functions automatically without human input, one or more of external input device 1212, display device 1214 and pointing device 1216 is omitted.

In the illustrated embodiment, special purpose hardware, such as an application specific integrated circuit (ASIC) 1220, is coupled to bus 1210. The special purpose hardware is configured to perform operations not performed by processor 1202 quickly enough for special purposes. Examples of application specific ICs include graphics accelerator cards for generating images for display 1214, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 1200 also includes one or more instances of a communications interface 1270 coupled to bus 1210. Communication interface 1270 provides a one-way or two-way communication coupling to a variety of external devices that operate with their own processors, such as printers, scanners and external disks. In general the coupling is with a network link 1278 that is connected to a local network 1280 to which a variety of external devices with their own processors are connected. For example, communication interface 1270 may be a parallel port or a serial port or a universal serial bus (USB) port on a personal computer. In some embodiments, communications interface 1270 is an integrated services digital network (ISDN) card or a digital subscriber line (DSL) card or a telephone modem that provides an information communication connection to a corresponding type of telephone line. In some embodiments, a communication interface 1270 is a cable modem that converts signals on bus 1210 into signals for a communication connection over a coaxial cable or into optical signals for a communication connection over a fiber optic cable. As another example, communications interface 1270 may be a local area network (LAN) card to provide a data communication connection to a compatible LAN, such as Ethernet. Wireless links may also be implemented. For wireless links, the communications interface 1270 sends or receives or both sends and receives electrical, acoustic or electromagnetic signals, including infrared and optical signals, that carry information streams, such as digital data. For example, in wireless handheld devices, such as mobile telephones like cell phones, the communications interface 1270 includes a radio band electromagnetic transmitter and receiver called a radio transceiver. In certain embodiments, the communications interface 1270 enables connection to the communication network 109 for visualizing risk levels associated with aerial vehicle flights.

The term computer-readable medium is used herein to refer to any medium that participates in providing information to processor 1202, including instructions for execution. Such a medium may take many forms, including, but not limited to, non-volatile media, volatile media and transmission media. Non-volatile media include, for example, optical or magnetic disks, such as storage device 1208. Volatile media include, for example, dynamic memory 1204. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

FIG. 13 illustrates a chip set 1300 upon which an embodiment of the invention may be implemented. Chip set 1300 is programmed to visualize risk levels associated with aerial vehicle flights as described herein and includes, for instance, the processor and memory components described with respect to FIG. 12 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 1300 includes a communication mechanism such as a bus 1301 for passing information among the components of the chip set 1300. A processor 1303 has connectivity to the bus 1301 to execute instructions and process information stored in, for example, a memory 1305. The processor 1303 may include one or more processing cores with each core configured to perform independently. A multi-core processor enables multiprocessing within a single physical package. Examples of a multi-core processor include two, four, eight, or greater numbers of processing cores. Alternatively or in addition, the processor 1303 may include one or more microprocessors configured in tandem via the bus 1301 to enable independent execution of instructions, pipelining, and multithreading. The processor 1303 may also be accompanied with one or more specialized components to perform certain processing functions and tasks such as one or more digital signal processors (DSP) 1307, or one or more application-specific integrated circuits (ASIC) 1309. A DSP 1307 typically is configured to process real-world signals (e.g., sound) in real time independently of the processor 1303. Similarly, an ASIC 1309 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 1303 and accompanying components have connectivity to the memory 1305 via the bus 1301. The memory 1305 includes both dynamic memory (e.g., RAM, magnetic disk, writable optical disk, etc.) and static memory (e.g., ROM, CD-ROM, etc.) for storing executable instructions that when executed perform the inventive steps described herein to visualize risk levels associated with aerial vehicle flights. The memory 1305 also stores the data associated with or generated by the execution of the inventive steps.

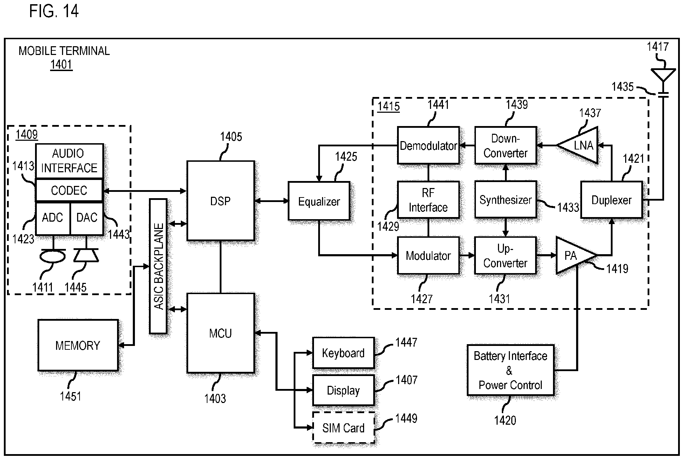

FIG. 14 is a diagram of exemplary components of a mobile terminal (e.g., handset) capable of operating in the system of FIG. 1, according to one embodiment. Generally, a radio receiver is often defined in terms of front-end and back-end characteristics. The front-end of the receiver encompasses all of the Radio Frequency (RF) circuitry whereas the back-end encompasses all of the base-band processing circuitry. Pertinent internal components of the telephone include a Main Control Unit (MCU) 1403, a Digital Signal Processor (DSP) 1405, and a receiver/transmitter unit including a microphone gain control unit and a speaker gain control unit. A main display unit 1407 provides a display to the user in support of various applications and mobile station functions that offer automatic contact matching. An audio function circuitry 1409 includes a microphone 1411 and microphone amplifier that amplifies the speech signal output from the microphone 1411. The amplified speech signal output from the microphone 1411 is fed to a coder/decoder (CODEC) 1413.

A radio section 1415 amplifies power and converts frequency in order to communicate with a base station, which is included in a mobile communication system, via antenna 1417. The power amplifier (PA) 1419 and the transmitter/modulation circuitry are operationally responsive to the MCU 1403, with an output from the PA 1419 coupled to the duplexer 1421 or circulator or antenna switch, as known in the art. The PA 1419 also couples to a battery interface and power control unit 1420.

In use, a user of mobile station 1401 speaks into the microphone 1411 and his or her voice along with any detected background noise is converted into an analog voltage. The analog voltage is then converted into a digital signal through the Analog to Digital Converter (ADC) 1423. The control unit 1403 routes the digital signal into the DSP 1405 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wireless fidelity (WiFi), satellite, and the like.

The encoded signals are then routed to an equalizer 1425 for compensation of any frequency-dependent impairments that occur during transmission though the air such as phase and amplitude distortion. After equalizing the bit stream, the modulator 1427 combines the signal with a RF signal generated in the RF interface 1429. The modulator 1427 generates a sine wave by way of frequency or phase modulation. In order to prepare the signal for transmission, an up-converter 1431 combines the sine wave output from the modulator 1427 with another sine wave generated by a synthesizer 1433 to achieve the desired frequency of transmission. The signal is then sent through a PA 1419 to increase the signal to an appropriate power level. In practical systems, the PA 1419 acts as a variable gain amplifier whose gain is controlled by the DSP 1405 from information received from a network base station. The signal is then filtered within the duplexer 1421 and optionally sent to an antenna coupler 1435 to match impedances to provide maximum power transfer. Finally, the signal is transmitted via antenna 1417 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 1401 are received via antenna 1417 and immediately amplified by a low noise amplifier (LNA) 1437. A down-converter 1439 lowers the carrier frequency while the demodulator 1441 strips away the RF leaving only a digital bit stream. The signal then goes through the equalizer 1425 and is processed by the DSP 1405. A Digital to Analog Converter (DAC) 1443 converts the signal and the resulting output is transmitted to the user through the speaker 1445, all under control of a Main Control Unit (MCU) 1403-which can be implemented as a Central Processing Unit (CPU) (not shown).

The MCU 1403 receives various signals including input signals from the keyboard 1447. The keyboard 1447 and/or the MCU 1403 in combination with other user input components (e.g., the microphone 1411) comprise a user interface circuitry for managing user input. The MCU 1403 runs a user interface software to facilitate user control of at least some functions of the mobile station 1401 to visualize risk levels associated with aerial vehicle flights. The MCU 1403 also delivers a display command and a switch command to the display 1407 and to the speech output switching controller, respectively. Further, the MCU 1403 exchanges information with the DSP 1405 and can access an optionally incorporated SIM card 1449 and a memory 1451. In addition, the MCU 1403 executes various control functions required of the station. The DSP 1405 may, depending upon the implementation, perform any of a variety of conventional digital processing functions on the voice signals. Additionally, DSP 1405 determines the background noise level of the local environment from the signals detected by microphone 1411 and sets the gain of microphone 1411 to a level selected to compensate for the natural tendency of the user of the mobile station 1401.

The CODEC 1413 includes the ADC 1423 and DAC 1443. The memory 1451 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 1451 may be, but not limited to, a single memory, CD, DVD, ROM, RAM, EEPROM, optical storage, or any other non-volatile or non-transitory storage medium capable of storing digital data.

An optionally incorporated SIM card 1449 carries, for instance, important information, such as the cellular phone number, the carrier supplying service, subscription details, and security information. The SIM card 1449 serves primarily to identify the mobile station 1401 on a radio network. The card 1449 also contains a memory for storing a personal telephone number registry, text messages, and user specific mobile station settings.

While the invention has been described in connection with a number of embodiments and implementations, the invention is not so limited but covers various obvious modifications, which fall within the scope of the appended claims.

## Claims

1. A computer-implemented method comprising:
determining a flight path (401) for an aerial vehicle (101);
aggregating risk-related data retrieved for the flight path and areas within a threshold distance of the flight path;
calculating at least one risk area (403) corresponding to a geographic area along the flight path based on the aggregated risk-related data;
predicting a risk level for the at least one risk area based on the aggregated risk-related data for the at least one risk area;
generating a representation of the at least one risk area as a virtual obstacle object (405), wherein the virtual obstacle object is a three-dimensional volume, wherein the at least one risk area forms the footprint of the virtual obstacle object, and wherein the volume extends vertically from the ground, at the at least one risk area, up to a height that is proportional to the respective risk level; and
rendering the virtual obstacle object in a user interface (601) of a device in relation to the flight path.

2. The method of claim 1, wherein the risk-related data includes at least one of:
population density data;
electromagnetic field data;
data on an absence of location signals;
weather data;
network coverage data; and
aviation related data.

3. The method of claim 1, wherein the virtual obstacle object represents a risk to the aerial vehicle that is not visible.

4. The method of claim 1, further comprising:
updating the risk-related data continuously, periodically, according to a schedule, or a combination thereof; and
updating the at least one risk area, the virtual obstacle object, the flight path, or a combination thereof based on the updating.

5. The method of claim 4, further comprising:
dynamically adjusting at least one dimension of the virtual obstacle object as a function of time based on the updating.

6. The method of claim 1, wherein the user interface is associated with a trip planning application, an augmented reality application, or a combination thereof.

7. The method of claim 6, wherein the augmented reality application is used by a pilot or a co-pilot of the aerial vehicle during a flight.

8. The method of claim 2, wherein the risk-related data includes population density data and the method further comprises:
selecting (801) an area of interest from among the at least one risk area;
determining (803) human activity data for the area of interest, wherein the human activity data includes a plurality of data sources; and
generating (807) a prediction of a population density in the area of interest at a selected time based on the human activity data.

9. The method of claim 8, wherein the prediction of the human population density is generated based on a trained machine learning model, and wherein the trained machine learning model is trained using ground truth data correlating reference historical human activity data to ground truth population density data.

10. The method of claim 8, wherein the selected time is future time that is provided with respect to a time of day, a day, a week, a season, a year, or a combination thereof.

11. The method of claim 8, wherein the plurality of data sources includes at least one of:
positioning data from a mobile device;
traffic data;
public transport routing request data;
smart city data;
mobile communications operator data;
social media data; and
event data.

12. The method of claim 8, wherein the method further comprises:
selecting an event occurring or expected to occur in the area of interest at the selected time, wherein the prediction of the population density is further based on the event; and
generating a visual representation of the population density, wherein a dimension of the visual representation is based on the population density.

13. An apparatus comprising:
at least one processor (1303); and
at least one memory (1305) including computer program code for one or more programs,
the at least one memory and the computer program code configured to, with the at least one processor, cause the apparatus to:
determine a flight path for an aerial vehicle;
aggregate risk-related data retrieved for the flight path and areas within a threshold distance of the flight path;
calculate at least one risk area corresponding to a geographic area along the flight path based on the aggregated risk-related data;
predict a risk level for the at least one risk area based on the aggregated risk-related data for the at least one risk area;
generate a representation of the at least one risk area as a virtual obstacle object, wherein the virtual obstacle object is a three-dimensional volume, wherein the at least one risk area forms the footprint of the virtual obstacle object, and wherein the volume extends vertically from the ground, at the at least one risk area, up to a height that is proportional to the risk level; and
render the virtual obstacle object in a user interface of a device in relation to the flight path.

14. The apparatus of claim 13, wherein the apparatus is caused to perform a method of any of claims 2 to 12.

15. A non-transitory computer-readable storage medium carrying one or more sequences of one or more instructions which, when executed by one or more processors, cause an apparatus to perform a method of any of claims 2 to 12.

## Patentansprüche

1. Computerimplementiertes Verfahren, umfassend:
Bestimmen einer Flugbahn (401) für ein Luftfahrzeug (101);
Aggregieren von risikobezogenen Daten, die für die Flugbahn und die Bereiche innerhalb einer Schwellendistanz von der Flugbahn abgerufen wurden;
Berechnen zumindest eines Risikobereichs (403), der einem geografischen Bereich entlang der Flugbahn entspricht, basierend auf den aggregierten risikobezogenen Daten;
Vorhersagen eines Risikoniveaus für den zumindest einen Risikobereich basierend auf den aggregierten risikobezogenen Daten für den zumindest einen Risikobereich;
Erzeugen einer Darstellung des zumindest einen Risikobereichs als virtuelles Hindernisobjekt (405), wobei das virtuelle Hindernisobjekt ein dreidimensionales Volumen ist, wobei der zumindest eine Risikobereich den Fußabdruck des virtuellen Hindernisobjekts bildet und wobei sich das Volumen in dem zumindest einem Risikobereich vertikal vom Boden bis zu einer Höhe erstreckt, die proportional zum entsprechenden Risikoniveau ist; und
Rendern des virtuellen Hindernisobjekts in einer Benutzerschnittstelle (601) einer Vorrichtung in Bezug auf die Flugbahn.

2. Verfahren nach Anspruch 1, wobei die risikobezogenen Daten zumindest eines der Folgenden umfassen:
Daten zur Bevölkerungsdichte;
Daten zum elektromagnetischen Feld;
Daten über das Fehlen von Ortungssignalen;
Wetterdaten;
Daten zur Netzwerkabdeckung; und
luftfahrtbezogene Daten.

3. Verfahren nach Anspruch 1, wobei das virtuelle Hindernisobjekt ein Risiko für das Luftfahrzeug darstellt, das nicht sichtbar ist.

4. Verfahren nach Anspruch 1, außerdem umfassend:
kontinuierliches, regelmäßiges, zeitplanbasiertes oder auf einer Kombination davon basierendes Aktualisieren der risikobezogenen Daten; und
Aktualisieren des zumindest einen Risikobereichs, des virtuellen Hindernisobjekts, der Flugbahn oder einer Kombination davon basierend auf der Aktualisierung.

5. Verfahren nach Anspruch 4, außerdem umfassend:
dynamisches Anpassen zumindest einer Dimension des virtuellen Hindernisobjekts als Funktion einer auf der Aktualisierung basierenden Zeit.

6. Verfahren nach Anspruch 1, wobei die Benutzerschnittstelle mit einer Routenplanungsanwendung, einer Anwendung mit erweiterter Realität oder einer Kombination davon assoziiert ist.

7. Verfahren nach Anspruch 6, wobei die Anwendung mit erweiterter Realität von einem Piloten oder Copiloten des Luftfahrzeugs während eines Flugs verwendet wird.

8. Verfahren nach Anspruch 2, wobei die risikobezogenen Daten Daten zur Bevölkerungsdichte umfassen und das Verfahren außerdem umfasst:
Auswählen (801) eines Bereichs von Interesse aus dem zumindest einen Risikobereich;
Bestimmen (803) von Daten über menschliche Aktivität für den Bereich von Interesse, wobei die Daten über menschliche Aktivität eine Vielzahl von Datenquellen umfassen; und
Erzeugen (807) einer Vorhersage über die Bevölkerungsdichte im Bereich von Interesse zu einem ausgewählten Zeitpunkt basierend auf den Daten über menschliche Aktivität.

9. Verfahren nach Anspruch 8, wobei die Vorhersage über die menschliche Bevölkerungsdichte basierend auf einem trainierten Modell für maschinelles Lernen erzeugt wird und wobei das trainierte Modell für maschinelles Lernen unter Verwendung von Grundwahrheitsdaten trainiert wird, die Daten über menschliche Aktivität in der Vergangenheit mit Grundwahrheitsdaten zur Bevölkerungsdichte korrelieren.

10. Verfahren nach Anspruch 8, wobei die ausgewählte Zeit eine zukünftige Zeit ist, die in Bezug auf eine Tageszeit, einen Tag, eine Woche, eine Jahreszeit, ein Jahr oder eine Kombination davon bereitgestellt wird.

11. Verfahren nach Anspruch 8, wobei die Vielzahl von Datenquellen zumindest eine der folgenden umfasst:
Positionsdaten von einem mobilen Gerät;
Verkehrsdaten;
Routenplanungsdaten für öffentlichen Verkehr;
Smart-City-Daten;
Mobilfunkbetreiberdaten;
Daten von sozialen Medien; und
Ereignisdaten.

12. Verfahren nach Anspruch 8, wobei das Verfahren außerdem umfasst:
Auswählen eines Ereignisses das zum ausgewählten Zeitpunkt im Bereich von Interesse stattfindet oder erwartet wird, wobei die Vorhersage der Bevölkerungsdichte außerdem auf dem Ereignis basiert; und
Erzeugen einer visuellen Darstellung der Bevölkerungsdichte, wobei eine Dimension der visuellen Darstellung auf der Bevölkerungsdichte basiert.

13. Gerät, umfassend:
zumindest einen Prozessor (1303); und
zumindest einen Speicher (1305), der einen Computerprogrammcode für ein oder mehrere Programme umfasst,
wobei der zumindest eine Speicher und der Computerprogrammcode ausgelegt sind, um zu bewirken, dass das Gerät mit dem zumindest einen Prozessor:
eine Flugbahn für ein Luftfahrzeug zu bestimmt;
risikobezogene Daten, die für die Flugbahn und Bereiche innerhalb einer Schwellendistanz von der Flugbahn abgerufen wurden, aggregiert;
zumindest einen Risikobereich, der einem geografischen Bereich entlang der Flugbahn entspricht, basierend auf den aggregierten risikobezogenen Daten berechnet;
ein Risikoniveau für den zumindest einen Risikobereich basierend auf den aggregierten risikobezogenen Daten für den zumindest einen Risikobereich vorhersagt;
eine Darstellung des zumindest einen Risikobereichs als virtuelles Hindernisobjekt erzeugt, wobei das virtuelle Hindernisobjekt ein dreidimensionales Volumen ist, wobei der zumindest eine Risikobereich den Fußabdruck des virtuellen Hindernisobjekts bildet und wobei sich das Volumen in dem zumindest einem Risikobereich vertikal vom Boden bis zu einer Höhe erstreckt, die proportional zum entsprechenden Risikoniveau ist; und
das virtuelle Hindernisobjekt in einer Benutzerschnittstelle einer Vorrichtung in Bezug auf die Flugbahn rendert.

14. Gerät nach Anspruch 13, wobei bewirkt wird, dass das Gerät ein Verfahren nach einem der Ansprüche 2 bis 12 ausführt.

15. Nichttransitorisches, computerlesbares Speichermedium, das eine oder mehrere Sequenzen einer oder mehrerer Anweisungen trägt, die bei Ausführung durch einen oder mehrere Prozessoren bewirken, dass ein Gerät ein Verfahren nach einem der Ansprüche 2 bis 12 ausführt.

## Revendications

1. Procédé mis en œuvre par ordinateur comprenant :
la détermination d'une trajectoire de vol (401) pour un véhicule aérien (101) ;
l'agrégation de données liées au risque récupérées pour la trajectoire de vol et les zones à une distance de seuil de la trajectoire de vol ;
le calcul d'au moins une zone de risque (403) correspondant à une zone géographique le long de la trajectoire de vol sur la base des données liées au risque agrégées ;
la prédiction d'un niveau de risque pour l'au moins une zone de risque sur la base des données liées au risque agrégées pour l'au moins une zone de risque ;
la génération d'une représentation de l'au moins une zone de risque en tant qu'objet formant obstacle virtuel (405), dans lequel l'objet formant obstacle virtuel est un volume tridimensionnel, dans lequel l'au moins une zone de risque forme l'empreinte de l'objet formant obstacle virtuel, et dans lequel le volume s'étend verticalement à partir du sol, au niveau de l'au moins une zone de risque, jusqu'à une hauteur qui est proportionnelle au niveau de risque respectif ; et
le rendu de l'objet formant obstacle virtuel dans une interface utilisateur (601) d'un dispositif par rapport à la trajectoire de vol.

2. Procédé selon la revendication 1, dans lequel les données liées au risque comportent au moins une de :
données de densité de population ;
données de champ électromagnétique ;
données sur une absence de signaux de localisation ;
données météorologiques ;
données de couverture réseau ; et
données liées à l'aviation.

3. Procédé selon la revendication 1, dans lequel l'objet formant obstacle virtuel représente un risque pour le véhicule aérien qui n'est pas visible.

4. Procédé selon la revendication 1, comprenant en outre :
la mise à jour des données liées au risque de manière continue, périodique, en fonction d'un plan, ou d'une combinaison de ceux-ci ; et
la mise à jour de l'au moins une zone de risque, de l'objet formant obstacle virtuel, de la trajectoire de vol, ou d'une combinaison de ceux-ci sur la base de la mise à jour.

5. Procédé selon la revendication 4, comprenant en outre :
l'ajustement dynamique d'au moins une dimension de l'objet formant obstacle virtuel en fonction du temps sur la base de la mise à jour.

6. Procédé selon la revendication 1, dans lequel l'interface utilisateur est associée à une application de planification de voyage, une application de réalité augmentée, ou une combinaison de celles-ci.

7. Procédé selon la revendication 6, dans lequel l'application de réalité augmentée est utilisée par un pilote ou un co-pilote du véhicule aérien pendant un vol.

8. Procédé selon la revendication 2, dans lequel les données liées au risque comportent des données de densité de population et le procédé comprend en outre :
la sélection (801) d'une zone d'intérêt parmi l'au moins une zone de risque ;
la détermination (803) de données d'activité humaine pour la zone d'intérêt, dans lequel les données d'activité humaine comportent une pluralité de sources de données ; et
la génération (807) d'une prédiction d'une densité de population dans la zone d'intérêt à un moment choisi sur la base des données d'activité humaine.

9. Procédé selon la revendication 8, dans lequel la prédiction de la densité de population humaine est générée sur la base d'un modèle d'apprentissage machine entraîné, et dans lequel le modèle d'apprentissage machine entraîné est entraîné au moyen de données de vérité terrain corrélant des données d'activité humaine historiques de référence aux données de densité de population de vérité terrain.

10. Procédé selon la revendication 8, dans lequel le moment choisi est un moment futur qui est prévu par rapport à un moment de la journée, un jour, une semaine, une saison, une année, ou une combinaison de ceux-ci.

11. Procédé selon la revendication 8, dans lequel la pluralité de sources de données comportent au moins une de :
données de positionnement provenant d'un dispositif mobile ;
données de trafic ;
données de demande d'itinéraire de transport public ;
données de ville intelligente ;
données d'opérateur de communications mobiles ;
données de média social ; et
données d'événement.

12. Procédé selon la revendication 8, dans lequel le procédé comprend en outre :
la sélection d'un événement se produisant ou qui devrait se produire dans la zone d'intérêt au moment choisi, dans lequel la prédiction de la densité de population est en outre basée sur l'événement ; et
la génération d'une représentation visuelle de la densité de population, dans lequel une dimension de la représentation visuelle est basée sur la densité de population.

13. Appareil comprenant :
au moins un processeur (1303) ; et
au moins une mémoire (1305) comportant un code de programme informatique pour un ou plusieurs programmes, l'au moins une mémoire et le code de programme informatique étant configurés pour, avec l'au moins un processeur, amener l'appareil à :
déterminer une trajectoire de vol pour un véhicule aérien ;
agréger les données liées au risque récupérées pour la trajectoire de vol et les zones à une distance de seuil de la trajectoire de vol ;
calculer au moins une zone de risque correspondant à une zone géographique le long de la trajectoire de vol sur la base des données liées au risque agrégées ;
prédire un niveau de risque pour l'au moins une zone de risque sur la base des données liées au risque agrégées pour l'au moins une zone de risque ;
générer une représentation de l'au moins une zone de risque en tant qu'objet formant obstacle virtuel, dans lequel l'objet formant obstacle virtuel est un volume tridimensionnel, dans lequel l'au moins une zone de risque forme l'empreinte de l'objet formant obstacle virtuel, et dans lequel le volume s'étend verticalement à partir du sol, au niveau de l'au moins une zone de risque, jusqu'à une hauteur qui est proportionnelle au niveau de risque ; et
rendre l'objet formant obstacle virtuel dans une interface utilisateur d'un dispositif par rapport à la trajectoire de vol.

14. Appareil selon la revendication 13, dans lequel l'appareil est amené à réaliser un procédé selon l'une quelconque des revendications 2 à 12.

15. Support de stockage lisible par ordinateur non transitoire portant une ou plusieurs séquences d'une ou plusieurs instructions qui, lorsqu'elles sont exécutées par un ou plusieurs processeurs, amènent un appareil à réaliser un procédé selon l'une quelconque des revendications 2 à 12.
